# EUROPÄISCHE PATENTSCHRIFT

(11) **EP 1 067 008 B1**
(45) Veröffentlichungstag und Bekanntmachung des Hinweises auf die Patenterteilung: **04.07.2007**
(21) Anmeldenummer: 00114403.9
(22) Anmeldetag: 05.07.2000
(51) Int. Cl.: F16D 48/06, F16H 61/688

(54) **Verfahren und Vorrichtung zur Kupplungskennlinienadaption**
Method and device for adapting the characteristic curve of the clutch
Méthode et dispositif pour adapter la courbe caractéristique d'embrayage

(30) Priorität: 06.07.1999 DE 19931160
(43) Veröffentlichungstag der Anmeldung: 10.01.2001
(73) Patentinhaber: Volkswagen Aktiengesellschaft, 38436 Wolfsburg (DE)
(72) Erfinder: Hinrichsen, Uwe, 38124 Braunschweig (DE); Bothe, Edgar, 31224 Peine (DE); Becker, Volker, 38518 Gifhorn (DE)
(74) Vertreter: Hübsch, Dirk

(56) Entgegenhaltungen:
- EP-A- 0 859 171
- EP-A- 0 931 961
- DE-A- 19 540 921

## Beschreibung

Die Erfindung beschäftigt sich mit einem Verfahren und einer Vorrichtung zur Kupplungskennlinienadaption eines automatisierten Doppelkupplungsgetriebes, insbesondere eines Kraftfahrzeuges.

Ein Verfahren zur Kupplungskennlinienadaption ist bekannt aus EP 0 859 171 A1.

Doppelkupplungsgetriebe sind seit längerem bekannt, so z.B. aus der DE 35 46 454 A1, in der ein Gangschaltgetriebe für ein Kraftfahrzeug mit Doppelkupplung vorgeschlagen wird. Ein Doppelkupplungsgetriebe weist gewöhnlich eine erste Getriebeeingangswelle, der eine erste Kupplung und Gangräder eines oder mehrerer ungeradzahliger Gänge zugeordnet sind, und eine zweite Getriebeeingangswelle auf, der eine zweite Kupplung und Gangräder eines oder mehrerer geradzahliger Gänge zugeordnet sind. In einem derart ausgebildeten Doppelkupplungsgetriebe besteht ein Schaltvorgang, d.h. ein Wechsel von einem wirksamen aktiven Gang in den nächsthöheren oder nächstniedrigeren Gang, dem sogenannten Zielgang, zunächst in einem Einlegen des Zielganges, was z.B. über eine zugeordnete Schaltmuffe und eine mit dieser in Verbindung stehende Synchronisiervorrichtung erfolgen kann, und in einem anschließenden gleichzeitigen Trennen der der Getriebeeingangswelle des aktiven Ganges zugeordneten Kupplung und Schließen der der Getriebeeingangswelle des Zielganges zugeordneten Kupplung. Die Kraftübertragung erfolgt also abwechselnd über die erste oder die zweite Getriebeeingangswelle.

Bei automatisierter Steuerung eines solchen Schaltvorganges sind relativ genaue Kenntnisse der Reibwerte der beiden Kupplungen erforderlich, um über eine Steuerung entsprechender Kupplungsstellkräfte eine Zugkraftunterbrechung und einen Schaltruck zu vermeiden, d.h. einen möglichst komfortablen Übergang von dem aktiven Gang auf den Zielgang zu erreichen.

Aufgrund von Verschleiß, Temperaturänderungen, Verschmutzung und anderer Einflüsse können sich die Reibwerte der Kupplungen ändern, so daß eine Anpassung der Kupplungssteuerung an die momentanen Reibverhältnisse wünschenswert ist, wie sie beispielsweise aus der DE 197 51 455.3 in Form einer Kennlinienadaption bekannt ist. Durch die Kennlinienadaption erfolgt eine Anpassung des Zusammenhanges zwischen einem übertragenen Drehmoment der jeweiligen Kupplung und einer diesem Drehmoment zugeordneten Kupplungsstellkraft bzw. einer mit der Kupplungsstellkraft verknüpften Steuergröße an geänderte Reibverhältnisse. Bei größeren Drehmomenten ist die Ermittlung des jeweils übertragenen Drehmomentes und damit des Reibwertes der betreffenden Kupplung über Betriebsparameter und Kennfelder eines zugeordneten Antriebsmotors möglich. Bei kleineren Drehmomenten < 20 Nm ist dies jedoch nicht möglich bzw. wäre mit größeren Ungenauigkeiten verbunden. Zur Steuerung komfortabler Anfahr- und Schaltvorgänge ist aber gerade der Bereich kleinerer übertragener Drehmomente wichtig.

Es ergibt sich daher das Problem, ein Verfahren und eine Vorrichtung zur Kupplungskennlinienadaption eines automatisierten Doppelkupplungsgetriebes bereitzustellen, das insbesondere für kleinere übertragene Drehmomente geeignet ist.

Das Problem wird durch ein Verfahren nach Anspruch 1 und durch eine Vorrichtung nach Anspruch 16 gelöst. Eine Verfahrensvariante wird in Anspruch 2 vorgestellt. Die Unteransprüche 3 bis 15 beschreiben bevorzugte Weiterbildungen der erfindungsgemäßen Verfahren.

Das Verfahren zur Kupplungskennlinienadaption eines automatisierten Doppelkupplungsgetriebes, insbesondere eines Kraftfahrzeuges, sieht vor, daß zunächst eine definierte Kupplungsstellkraft zur Schließung einer einer freien Getriebeeingangswelle zugeordneten Kupplung erzeugt wird, daß daraufhin eine einem Gang der freien Getriebeeingangswelle zugeordnete Synchronisiervorrichtung betätigt wird, daß die Betätigung der betreffenden Synchronisiervorrichtung zu einem späteren Zeitpunkt gelöst wird, daß dann ein Drehzahlgradient der freien Getriebeeingangswelle ermittelt wird, daß ein übertragenes Drehmoment der der freien Getriebeeingangswelle zugeordneten Kupplung ermittelt wird, und daß schließlich die Kupplungskennlinie der der freien Getriebeeingangswelle zugeordneten Kupplung unter Verwendung der Werte der Kupplungsstellkraft und des zugeordneten übertragenen Drehmomentes adaptiert wird.

Durch das Schließen der freien, momentan nicht zur Übertragung eines Drehmomentes genutzten Kupplung, wird diese Kupplung und die zugeordnete freie Getriebeeingangswelle auf die Drehzahl eines zugeordneten Antriebsmotors des Kraftfahrzeuges beschleunigt, d.h. auf eine Synchrondrehzahl n_{Sync} gebracht. Die dazu verwendete Kupplungsstellkraft F_{K} wird zumeist so bemessen, daß sie relativ klein ist, d.h. unter 20 Nm liegt, und damit zur Kupplungskennlinienadaption für den Bereich kleinerer übertragener Drehmomente geeignet ist. Es versteht sich von selbst, daß sich die Kupplungsstellkraft F_{K} bei Verwendung einer beispielsweise als Lamellenkupplung ausgebildeten Naßkupplung aus dem Produkt aus einem wirksamen Kupplungsdruck und einer zugeordneten Wirkfläche, bei Verwendung einer üblicherweise durch ein Anpreßfederelement passiv schließbaren Trockenkupplung dagegen aus der Differenz aus einer Federkraft des Anpreßfederelementes und einer Stellkraft eines zugeordneten Kupplungsaktuators ergibt. Durch die Betätigung einer Synchronisiervorrichtung eines der Gänge, die der freien Getriebeeingangswelle zugeordnet sind, wird die freie Getriebeeingangswelle verzögert oder beschleunigt, je nachdem ob die betätigte Synchronisiereinrichtung einem höheren oder einem niedrigeren Gang als dem aktuell eingelegten aktiven Gang zugeordnet ist. Die der freien Getriebeeingangswelle zugeordnete freie Kupplung wird dabei in Schlupfbetrieb gebracht. Die Betätigung der Synchronisiereinrichtung erfolgt dabei mit einer Synchronstellkraft F_{Sync}, die so bemessen ist, daß einerseits ein von der Synchronstellkraft F_{Sync} abhängiges Synchronmoment M_{Sync} größer als ein in der freien Kupplung übertragenes Kupplungsmoment M_{K} ist, daß aber eine Schaltung des betreffenden Ganges möglichst vermieden wird. Wenn die Drehzahldifferenz zwischen der momentanen Drehzahl der freien Getriebeeingangswelle und der Synchrondrehzahl n_{Sync} genügend groß ist, wird die Betätigung der betreffenden Synchronisiereinrichtung gelöst, worauf die freie Getriebeeingangswelle unter der Wirkung des in der freien Kupplung wirksamen übertragenen Drehmomentes M_{K} wieder auf die Synchrondrehzahl n_{Sync} beschleunigt bzw. verzögert wird. Der entsprechende Drehzahlgradient dn/dt der freien Getriebeeingangswelle wird bestimmt, was z.B. aus einer in einer bestimmten Zeitspanne Δt überbrückten Drehzahldifferenz Δn durch die Berechnung eines entsprechenden Differenzenquotienten Δn/Δt erfolgen kann. Unter Berücksichtigung eines resultierenden Trägheitsmomentes Θᵣₑₛ der freien Getriebeeingangswelle, das Anteile anderer mit der Getriebeeingangswelle in Verbindung stehender rotierender Bauteile enthält, und eines auf die freie Getriebeeingangswelle einwirkenden resultierenden Reibmomentes M_{R} bzw. eines resultierenden Schleppmomentes M_{S} wird das der entsprechenden Kupplungsstellkraft F_{K} zugeordnete Kupplungsmoment M_{K} nach der Formel M_{K} = Θ_{W} * π/30 * dn/dt + M_{R} bzw. M_{K} = Θ_{W} * π/30 * dn/dt - M_{S} bestimmt. Dabei wird der Begriff resultierendes Reibmoment M_{R} verwendet, wenn auf die freie Getriebeeingangswelle einwirkende Reib- und Schleppmomente im Ergebnis bremsend wirken, d.h. die Reibmomente überwiegen. Wirken diese Momente jedoch im Ergebnis treibend, wird von einem resultierenden Schleppmoment M_{S} gesprochen. Zur genauen Bestimmung des Kupplungsmomentes M_{K} ist eine möglichst genaue Kenntnis des jeweiligen Wertes des resultierenden Reib- bzw. Schleppmomentes wünschenswert. Entsprechende Werte können aus Prüfstandsläufen oder als Schätzwerte vorliegen. Mit dem wie zuvor beschrieben ermittelten neuen Wertepaar (F_{K}, M_{K}) erfolgt schließlich die Kennlinienadaption der freien Kupplung, was z.B. nach einem in der DE 197 51 455.3 beschriebenen Verfahren erfolgen kann.

Zur Anwendung bei einem geschalteten Gang der freien Getriebeeingangswelle, was z.B. für das Ende eines Schaltvorganges zutrifft, ist anstelle der Verfahrensschritte zur Betätigung der zugeordneten Synchronisiervorrichtung und zum Lösen der Betätigung ein Verfahrensschritt zum Lösen der Schaltung des betreffenden Ganges vorgesehen. Die freie Getriebeeingangswelle wird dann über den noch geschalteten Gang bei geöffneter zugeordneter Kupplung zunächst auf einer Drehzahl gehalten, die, je nachdem ob der aktuell wirksame Gang höher oder niedriger ist, über oder unter der Synchrondrehzahl n_{Sync} liegt. Nach dem Lösen der Schaltung wird die freie Getriebeeingangswelle unter der Wirkung des Kupplungsmomentes M_{K} entsprechend verzögert oder beschleunigt. Der übrige Ablauf dieser Verfahrensvariante ist identisch zu dem zuvor beschriebenen Verfahren.

Zur Verbesserung der Genauigkeit bei der Bestimmung des Kupplungsmomentes M_{K} und der nachfolgenden Kupplungskennlinienadaption kann das resultierende Reibmoment M_{R} bzw. das resultierende Schleppmoment M_{S} vor und / oder nach den Verfahrensschritten des erfindungsgemäßen Verfahrens ermittelt werden. Man ist dann nicht auf Labor- oder Schätzwerte angewiesen, sondern ermittelt einen jeweils aktuellen Wert des Reib- bzw. Schleppmomentes, so daß z.B. aktuelle Betriebs- und Verschleißeinflüsse berücksichtigt werden können. Erfolgt die Ermittlung vorher und nachher, kann ein Mittelwert gebildet werden, der dann im weiteren Verfahren, insbesondere bei der Bestimmung des Kupplungsmomentes M_{K}, Verwendung findet.

Das resultierende Reibmoment M_{R} oder das resultierende Schleppmoment M_{S} kann analog zu dem erfindungsgemäßen Verfahren durch eine Betätigung einer einem Gang (G1 - G6) der freien Getriebeeingangswelle (W1; W2) zugeordneten Synchronisiervorrichtung (S1 - S4), durch ein späteres Lösen der Betätigung der betreffenden Synchronisiervorrichtung (S1 - S4), durch eine anschließende Ermittlung eines Drehzahlgradienten dn/dt der freien Getriebeeingangswelle (W1; W2), und schließlich durch eine Ermittlung des auf die freie Getriebeeingangswelle (W1; W2) wirksamen resultierenden Reibmomentes (M_{R}) bzw. des resultierenden Schleppmomentes (M_{S}) erfolgen. Eine derartige Vorgehensweise ermöglicht die Ermittlung zeitgenauer Werte, so daß das ermittelte resultierende Reib- bzw. Schleppmoment dem aktuellen Verschleiß- und Betriebszustand des Doppelkupplungsgetriebes bzw. der freien Getriebeeingangswelle und mit dieser in Verbindung stehender Bauteile entspricht.

Die Kupplungskennlinienadaption kann bei Vorliegen einer quasistationären Betriebsweise des Kraftfahrzeuges durchgeführt werden. Unter einer quasistationären Betriebsweise ist zu verstehen, daß keine Beschleunigungs- oder Verzögerungsphasen des Kraftfahrzeuges, insbesondere aber keine nennenswerten Drehzahländerungen des zugeordneten Antriebsmotors vorliegen. Dies hat den Vorteil, daß die Drehzahl der aktiven Getriebeeingangswelle, die bei einem schlupffreien Betrieb auch die Synchrondrehzahl n_{Sync} der freien Getriebeeingangswelle bildet, näherungsweise konstant ist, so daß keine Korrekturen innerhalb des Verfahrensablaufes erforderlich werden.

Die Kupplungskennlinienadaption kann in einem regelmäßigen oder unregelmäßigen Zeitabstand wiederholt werden. Durch eine Wiederholung des Verfahrens während des Betriebes des Kraftfahrzeuges ist eine ständige Anpassung der Kupplungssteuerung an geänderte Betriebsbedingungen der beiden Kupplungen möglich. Bei einer regelmäßigen Wiederholung ist nur eine Überwachung eines Zeittaktes nötig. Bei einer Wiederholung des Verfahrens in unregelmäßigen Zeitabständen können andere Kriterien, wie beispielsweise verschleißabhängige Integralwerte von weg- oder umdrehungsabhängigen Daten, zur Auslösung eines wiederholten Verfahrensablaufes verwendet werden. Dies erfordert zwar einen höheren Aufwand, insbesondere an Sensoren, wird aber einer tatsächlichen Änderung des Betriebszustandes der Kupplungen im Hinblick auf geänderte Reibwerte besser gerecht.

Bei wiederholter Durchführung des Verfahrens kann die Kupplungsstellkraft F_{K} auch variiert werden. Hierdurch wird ein größerer Bereich der jeweiligen Kennlinie abgedeckt und somit die Qualität der Kennlinienadaption verbessert.

Bei der Auslösung der Betätigung der Synchronisiervorrichtung sind prinzipiell zwei Vorgehensweisen möglich.

Zum einen kann die Betätigung der Synchronisiereinrichtung nach Ablauf einer vorgegebenen Zeitspanne nach der Erzeugung der Kupplungsstellkraft F_{K} erfolgen. Die Zeitspanne ist dann derart festgelegt, daß die freie Getriebeeingangswelle zuvor die Synchrondrehzahl n_{Sync} sicher erreicht hat. Eine Überwachung der Drehzahl der freien Getriebeeingangswelle ist somit in dieser Phase des Verfahrens nicht erforderlich.

Zum anderen kann die Betätigung der Synchronisiervorrichtung auch erst nach Erreichen der Synchrondrehzahl n_{Sync} der freien Getriebeeingangswelle erfolgen. In diesem Fall ist zwar eine Überwachung der Drehzahl der freien Getriebeeingangswelle erforderlich, der Verfahrensablauf wird jedoch beschleunigt. Das Erreichen der Synchrondrehzahl kann dabei durch einen Vergleich der Drehzahl der freien Getriebeeingangswelle mit der Drehzahl der aktiven Getriebeeingangswelle oder mit der Drehzahl des Antriebsmotors festgestellt werden.

In dem Verfahren kann jeweils die einem bestimmten Gang der freien Getriebeeingangswelle zugeordnete Synchronisiervorrichtung betätigt werden, d.h. es wird jeweils immer dieselbe der ersten bzw. der zweiten Getriebeeingangswelle zugeordnete Synchronisiervorrichtung betätigt. Aufgrund des damit verbundenen höheren Verschleißes sind die betreffenden zwei Synchronisiervorrichtungen vorteilhaft verstärkt ausgeführt. Die übrigen Synchronisiervorrichtungen werden jedoch geschont und der Verfahrensablauf vereinfacht, da eine Bestimmung der jeweils zu betätigenden Synchronisiervorrichtung entfällt.

Es kann jedoch auch, bezogen auf den aktuell eingelegten Gang, jeweils die dem nächsthöheren oder nächstniedrigeren Gang der freien Getriebeeingangswelle zugeordnete Synchronisiervorrichtung betätigt werden. Dies hat den Vorteil, daß sich bei der Betätigung der jeweiligen Synchronisiervorrichtung keine zu großen Drehzahlunterschiede an der Synchronisiervorrichtung selbst und an der Kupplung der freien Getriebeeingangswelle ergeben, so daß aufgrund geringerer Relativgeschwindigkeiten ein größerer Verschleiß vermieden wird. Im übrigen werden dann alle Synchronisiervorrichtungen näherungsweise gleich häufig benutzt und somit gleich stark abgenutzt.

In dem Verfahren kann die Synchronisiervorrichtung nach Ablauf einer vorgegebenen Zeitspanne nach der Betätigung der Synchronisiervorrichtung gelöst werden. Die Zeitspanne ist dann derart bemessen, daß sich eine ausreichend große Drehzahldifferenz an der freien Kupplung ergibt, so daß der Drehzahlgradient dn/dt, der sich nach dem Lösen der Synchronisiereinrichtung unter der Wirkung des übertragenen Drehmomentes der freien Kupplung ergibt, mit ausreichender Genauigkeit sicher bestimmt werden kann. Bei Verwendung der vorgegebenen Zeitspanne als Kriterium zum Lösen der Synchronisiervorrichtung ist eine Überwachung der Drehzahl der freien Getriebeeingangswelle in dieser Phase des Verfahrens nicht erforderlich.

Alternativ kann die Synchronisiervorrichtung jedoch auch nach Erreichen einer vorgegebenen Drehzahldifferenz der freien Getriebeeingangswelle zu der Synchrondrehzahl gelöst werden. In diesem Fall ist zwar eine Überwachung der Drehzahl der freien Getriebeeingangswelle erforderlich, der Verfahrensablauf wird jedoch beschleunigt.

Nach dem Lösen der Synchronisiereinrichtung kann in mehreren festgelegten zeitlichen Abständen jeweils eine Drehzahl der freien Getriebeeingangswelle ermittelt und aus den jeweiligen Drehzahlwerten n_{iG} und zugeordneten Zeitwerten t_{iG} der Drehzahlgradient bestimmt werden. Im einfachsten Fall wird nach Ablauf einer ersten Zeitspanne t_{1G} eine erste Drehzahl n_{1G} und nach Ablauf einer größeren zweiten Zeitspanne t_{2G} eine zweite Drehzahl n_{2G} der freien Getriebeeingangswelle ermittelt. Aus den beiden Drehzahlen n_{1G}, n_{2G} und den beiden Zeitspannen t_{1G}, t_{2G} kann dann der Drehzahlgradient dn/dt über einen entsprechenden Differenzenquotienten dn/dt = (n_{2G} - n_{1G})/(t_{2G} - t_{1G}) ermittelt werden. Bei Vorliegen von mehr als zwei Wertepaaren (n_{iG}, t_{iG}) kann die Ermittlung des Drehzahlgradienten dn/dt jedoch auch über bekannte Verfahren der numerischen Differentiation erfolgen. Die beschriebene Vorgehensweise erfordert zwar eine ständige Überwachung der Drehzahl der freien Getriebeeingangswelle, ergibt jedoch eine hohe Genauigkeit des derart ermittelten Drehzahlgradienten.

Alternativ kann eine Beschleunigungs- oder Verzögerungszeit Δt_{G} zwischen dem Lösen der Synchronisiereinrichtung und dem Erreichen der Synchrondrehzahl n_{Sync} der freien Getriebeeingangswelle ermittelt werden. Aus der Drehzahldifferenz (n_{Sync} - n_{0G}) und der Beschleunigungs- oder Verzögerungszeit Δt_{G} kann dann der Drehzahlgradient bestimmt werden, nämlich in Form von dn/dt = (n_{Sync} - n_{0G})/ Δt_{G} In diesem Fall ist nur die Ermittlung der Drehzahl n_{0G} der freien Getriebeeingangswelle zum Zeitpunkt des Lösens der Synchronisiereinrichtung und der Zeitspanne Δt_{G} erforderlich. Der Verfahrensschritt ist also stark vereinfacht und ermöglicht die Verwendung einer weniger leistungsfähigen und damit preisgünstigeren Steuerung.

Das Verfahren zur Bestimmung eines kupplungsabhängigen Drehzahlgradienten eines automatisierten Doppelkupplungsgetriebes, insbesondere eines Kraftfahrzeuges, sieht vor, daß zunächst eine definierte Kupplungsstellkraft zur Schließung einer einer freien Getriebeeingangswelle zugeordneten Kupplung erzeugt wird, daß daraufhin eine einem Gang der freien Getriebeeingangswelle zugeordnete Synchronisiervorrichtung betätigt wird, daß die Betätigung der betreffenden Synchronisiervorrichtung zu einem späteren Zeitpunkt gelöst wird, und daß dann ein Drehzahlgradient der freien Getriebeeingangswelle ermittelt wird. Das Verfahren kann beispielsweise genutzt werden, um einen Verschleißzustand der jeweiligen der freien Getriebeeingangswelle zugeordneten Kupplung zu ermitteln.

In ähnlicher Weise kann ein Verfahren zur Bestimmung eines kupplungsabhängigen Drehzahlgradienten eines einfachen automatisierten Stufengetriebes, insbesondere eines Kraftfahrzeuges, durchgeführt werden, das vorsieht, daß zunächst eine definierte Kupplungsstellkraft zur Schließung einer zugeordneten Kupplung erzeugt wird, daß dann eine einem Gang zugeordnete Synchronisiervorrichtung betätigt wird, daß zu einem späteren Zeitpunkt die Betätigung der betreffenden Synchronisiervorrichtung gelöst wird, und daß ein sich daraus ergebender Drehzahlgradient einer zugeordneten Getriebeeingangswelle bestimmt wird. Dieses Verfahren kann beispielsweise vor einem Losfahren genutzt werden, um einen Verschleißzustand der Kupplung festzustellen, was z.B. zur Kennlinienadaption einer Naßkupplung, zur Nachstellung einer Trockenkupplung, oder zur Ausgabe eines Warnsignals zur Durchführung einer Kupplungsreparatur nutzbar ist.

Eine Vorrichtung zur Durchführung des erfindungsgemäßen Verfahrens nach Anspruch 1 weist mindestens folgende Baugruppen auf: eine Steuereinheit zur Steuerung eines Verfahrensablaufes, ein Kupplungssteuergerät zur Erzeugung definierter Kupplungsstellkräfte zur Schließung einer ersten und einer zweiten Kupplung, ein Synchronisiersteuergerät zur Betätigung und zum Lösen der Betätigung einer jeweils einem Gang einer ersten und einer zweiten Getriebeeingangswelle zugeordneten Synchronisiervorrichtung, eine Drehzahlmeßvorrichtung zur Ermittlung der Drehzahl der ersten und der zweiten Getriebeeingangswelle, eine Zeitmessvorrichtung zur Ermittlung von Zeitspannen, eine Recheneinheit zur Berechnung von Drehzahlgradienten und Kennliniendaten, und eine Speichereinheit zur Abspeicherung der Kennliniendaten.

Analog dazu weist die Vorrichtung zur Bestimmung eines kupplungsabhängigen Drehzahlgradienten eines automatisierten Doppelkupplungsgetriebes eine Steuereinheit zur Steuerung eines Verfahrensablaufes, ein Kupplungssteuergerät zur Erzeugung definierter Kupplungsstellkräfte zur Schließung einer ersten und einer zweiten Kupplung, ein Synchronisiersteuergerät zur Betätigung und zum Lösen der Betätigung einer jeweils einem Gang einer ersten und einer zweiten Getriebeeingangswelle zugeordneten Synchronisiervorrichtung, eine Drehzahlmeßvorrichtung zur Ermittlung einer Drehzahl der ersten und der zweiten Getriebeeingangswelle, eine Zeitmessvorrichtung zur Ermittlung von Zeitspannen, und eine Recheneinheit zur Berechnung eines Drehzahlgradienten auf.

In ähnlicher Weise umfaßt die Vorrichtung zur Bestimmung eines kupplungsabhängigen Drehzahlgradienten eines einfachen automatisierten Stufengetriebes eine Steuereinheit zur Steuerung eines Verfahrensablaufes, ein Kupplungssteuergerät zur Erzeugung einer definierten Kupplungsstellkraft zur Schließung einer zugeordneten Kupplung, ein Synchronisiersteuergerät zur Betätigung und zum Lösen der Betätigung einer jeweils einem Gang zugeordneten Synchronisiervorrichtung, eine Drehzahlmeßvorrichtung zur Ermittlung einer Drehzahl einer zugeordneten Getriebeeingangswelle, eine Zeitmessvorrichtung zur Ermittlung von Zeitspannen, und eine Recheneinheit zur Berechnung eines Drehzahlgradienten.

Im folgenden wird das Verfahren zur Kupplungskennlinienadaption eines automatisierten Doppelkupplungsgetriebes anhand einer Verfahrensvariante mit Hilfe von drei Figuren näher erläutert. Dazu zeigen
- Figur 1:: den Verfahrensablauf in Form eines Ablaufplanes,
- Figur 2:: zeitliche Verläufe von Drehzahlen und Drehmomenten der freien Getriebeeingangswelle in Form eines Diagramms, und
- Figur 3:: den Aufbau des Doppelkupplungsgetriebes als Prinzipskizze.

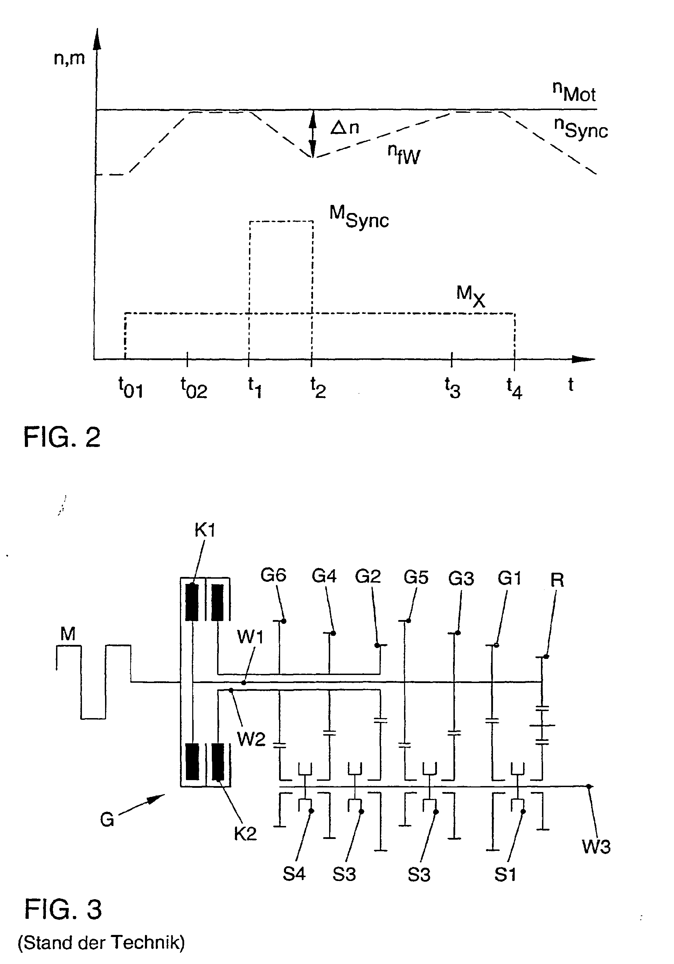

In der Figur 3 ist ein bekanntes Doppelkupplungsgetriebe G schematisch dargestellt, bei dem das erfindungsgemäße Verfahren anwendbar ist. Das Doppelkupplungsgetriebe G weist sechs Vorwärtsgängen G1 bis G6 zugeordnete Zahnradpaare und Zahnräder eines Rückwärtsganges R auf. Ausgangsseitig sind die jeweiligen Zahnräder drehbar und über Schalt- und Synchronisiervorrichtungen S1 bis S4 auf einer Getriebeausgangswelle W3 gelagert bzw. mit dieser verbindbar. Die Schalt- und Synchronisiervorrichtungen S1, S3 und S4 sind doppelseitig wirksam ausgebildet, während die Vorrichtung S2 nur einseitig wirksam ausgebildet ist. Eingangsseitig sind die jeweiligen Zahnräder jeweils fest mit einer von zwei Eingangswellen W1 und W2 verbunden. Die ungeradzahligen Gänge G1, G3 und G5 und der Rückwärtsgang R sind der ersten Getriebeeingangswelle W1, die geradzahligen Gänge G2, G4 und G6 der zweiten Getriebeeingangswelle W2 zugeordnet. Die zwei Getriebeeingangswellen W1 und W2 stehen jeweils mit einer separaten Kupplung K1 bzw. K2 in Verbindung, über die sie mit dem Antriebsmotor M verbindbar bzw. von diesem trennbar sind. Während eines normalen Fahrbetriebes ist einer der Gänge G1 - G6 geschaltet und die mit der entsprechenden Getriebeeingangswelle W1 bzw. W2, der der Gang zugeordnet ist, in Verbindung stehende Kupplung K1 bzw. K2 geschlossen. Bei einem Schaltvorgang wird zunächst der Zielgang, der der anderen, offenen Kupplung K1 bzw. K2 zugeordnet ist, geschaltet. Ein Übergang von dem aktiven Gang auf den Zielgang erfolgt dann durch gleichzeitiges Öffnen der Kupplung des aktiven Ganges und Schließen der Kupplung des Zielganges. Der Kraftfluß des Getriebes verläuft also abwechselnd entweder über die erste Kupplung K1, die erste Getriebeeingangswelle W1 und ein dieser zugeordnetes Zahnradpaar oder über die zweite Kupplung K2, die zweite Getriebeeingangswelle W2 und ein dieser zugeordnetes Zahnradpaar auf die Getriebeabtriebswelle W3. Für das erfindungsgemäße Verfahren wird jeweils die momentan nicht genutzte freie Kupplung K1 bzw. K2, die entsprechende freie Getriebeeingangswelle W1 bzw. W2 und eine Synchronisiervorrichtung S1 - S4 benutzt, die einem Gang G1 - G6 der betreffenden Getriebeeingangswelle W1 bzw. W2 zugeordnet ist.

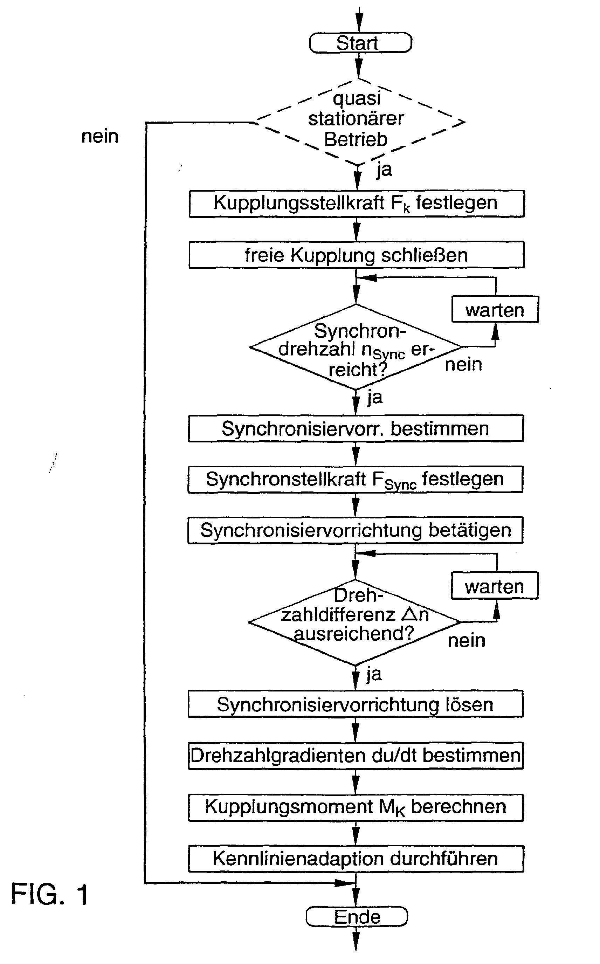

Die in der Fig. 1 dargestellte Variante des erfindungsgemäßen Verfahrens zur Kupplungskennlinienadaption eines automatisierten Doppelkupplungsgetriebes G ist zur Anwendung in einem Kraftfahrzeug vorgesehen. Vor einer Durchführung des Verfahrens wird zunächst geprüft, ob ein quasistationärer Betriebszustand des Kraftfahrzeuges vorliegt, d.h. ob keine Beschleunigungs- oder Verzögerungsphase vorliegt. Falls diese Prüfung negativ ausfällt, wird ohne eine Durchführung von Programmschritten an das Programmende verzweigt, von wo aus beispielsweise in ein übergeordnetes Steuerprogramm zurückverzweigt werden kann. Bei Vorliegen eines quasistationären Betriebszustandes wird zunächst eine Kupplungsstellkraft F_{K} festgelegt, für die die Kupplungskennlinienadaption der freien, d.h. momentan nicht in eine Kraftübertragung eingebundene Kupplung K1 bzw. K2 einer von zwei Getriebeeingangswellen W1 bzw. W2 vorgesehen ist. Die Kupplungsstellkraft F_{K} liegt im Bereich von 5 Nm bis 20 Nm, kann jeweils konstant vorgegeben sein oder innerhalb eines vorgegebenen Bereiches variiert werden. Danach wird die freie Kupplung K1 bzw. K2 unter der Wirkung der Kupplungsstellkraft F_{K} geschlossen, was ein Kupplungsmoment M_{K} zur Folge hat, durch das eine Beschleunigung der zugeordneten freien Getriebeeingangswelle W1 bzw. W2 auf eine Synchrondrehzahl n_{Sync} erfolgt, die im allgemeinen mit der Drehzahl n_{Mot} eines mit dem Doppelkupplungsgetriebe K in Verbindung stehenden Antriebsmotors M übereinstimmt. Nach dem Schließen der freien Kupplung K1 bzw. K2 wird geprüft, ob die freie Getriebeeingangswelle W1 bzw. W2 die Synchrondrehzahl n_{Sync} erreicht hat. Im negativen Fall erfolgt so lange eine Rückverzweigung über eine Warteschleife, bis die Synchrondrehzahl n_{Sync} erreicht ist. Im positiven Fall wird ein Gang G1 - G6 einer zu betätigenden Synchronisiervorrichtung S1 - S4 bestimmt. Der entsprechende Gang kann jeweils für jede der beiden Getriebeeingangswellen W1 bzw. W2 immer derselbe sein. Es kann aber auch abhängig von einem momentan eingelegten aktiven Gang der nächsthöhere oder der nächstniedrigere Gang bzw. die diesem Gang zugeordnete Synchronisiervorrichtung bestimmt werden. Danach wird eine Synchronstellkraft F_{Sync} festgelegt, mit der eine Betätigung der zuvor bestimmten Synchronisiervorrichtung S1 - S4 vorgesehen ist. Die Synchronstellkraft F_{Sync} wird derart bemessen, daß das durch diese hervorgerufene Synchronmoment M_{Sync} größer als das Kupplungsmoment M_{K}, jedoch so klein ist, daß eine Schaltung des entsprechenden Ganges vermieden wird.

Nach der Festlegung der Synchronstellkraft F_{Sync} wird die zuvor bestimmte Synchronisiervorrichtung S1 - S4 mit Hilfe der Synchronstellkraft F_{Sync} betätigt. Unter der Annahme eines im Vergleich zu dem aktiven Gang höheren Ganges der betätigten Synchronisiervorrichtung wird die freie Getriebeeingangswelle W1 bzw. W2 unter der Wirkung des Synchronmomentes M_{Sync} verzögert, wobei die freie Kupplung K1 bzw. K2 in Schlupfbetrieb gerät. In dem vorliegenden Verfahren wird nun geprüft, ob die derart erzeugte Drehzahldifferenz Δn der freien Getriebeeingangswelle W1 bzw. W2 ausreichend groß ist, um einen nachfolgenden Drehzahlgradienten dn/dt sicher bestimmen zu können. Im negativen Fall wird über eine Warteschleife so lange zurückverzweigt, bis die Drehzahldifferenz Δn ausreichend groß ist. Im positiven Fall wird die Synchronisiervorrichtung S1 - S4 gelöst, worauf die freie Getriebeeingangswelle W1 bzw. W2 im wesentlichen unter der Wirkung des Kupplungsmomentes M_{K} wieder auf die Synchrondrehzahl M_{Sync} beschleunigt wird. Der sich dabei ergebende Drehzahlgradient dn/dt wird nun bestimmt, um daraus den Wert des übertragenen Kupplungsmomentes M_{K} zu berechnen. Es versteht sich, daß bei der Berechnung ein resultierendes Trägheitsmoment und ein resultierendes Reib- bzw. Schleppmoment der freien Getriebeeingangswelle und zugeordneter mitrotierender Bauteile berücksichtigt werden. Mit den derart ermittelten Daten der Kupplungsstellkraft F_{K} oder einer mit dieser verknüpften Steuergröße, wie z.B. einer Steuerspannung, und dem ermittelten Kupplungsmoment M_{K} erfolgt dann abschließend die Kupplungskennlinienadaption nach einem beliebigen Verfahren, z.B. wie es aus der DE 197 51 455.3 bekannt ist.

Zur Verdeutlichung des zuvor beschriebenen Verfahrens sind in Fig. 2 die zeitlichen Verläufe von Drehzahlen n und Drehmomenten M über der Zeit t in einer vereinfachten linearisierten Form dargestellt. Die ununterbrochene waagerechte Linie kennzeichnet den Verlauf der Motordrehzahl n_{Mot}, die unterbrochene Linie den Verlauf der Drehzahl n_{fW} der freien Getriebeeingangswelle des automatisierten Doppelkupplungsgetriebes G. Die einfach strichpunktierte Linie gibt den Verlauf des durch die verwendete Synchronisiervorrichtung S1 - S4 erzeugten Synchronmomentes M_{Sync} und die doppelt strichpunktierte Linie den Verlauf des durch die freie Kupplung K1 bzw. K2 übertragenen Drehmomentes M_{K} wieder. Da hier ein quasistationärer Betrieb des betreffenden Kraftfahrzeuges angenommen wird, verläuft die Motordrehzahl n_{Mot} konstant über der Zeit t. Die Drehzahl n_{fW} der freien Getriebeeingangswelle ist zunächst ebenfalls konstant und befindet sich aufgrund überwiegender Schleppmomente auf einer Drehzahl, die zwischen Stillstand und der Motordrehzahl n_{Mot} liegt. Zum Zeitpunkt t₀₁ wird die freie Kupplung K1 bzw. K2 des automatisierten Doppelkupplungsgetriebes G unter der Wirkung der Kupplungsstellkraft F_{K} geschlossen, so daß in der freien Kupplung K1 bzw. K2 das Kupplungsmoment M_{K} auf die freie Getriebeeingangswelle W1 bzw. W2 übertragen wird, was zu einer Beschleunigung der freien Getriebeeingangswelle W1 bzw. W2 von der Ausgangsdrehzahl auf die Motordrehzahl n_{Mot} führt, die gleich der Synchrondrehzahl n_{Sync} ist und zum Zeitpunkt t₀₂ erreicht wird. Zum Zeitpunkt t₁ wird die Synchronisiervorrichtung S1 - S4 eines im Vergleich zu dem eingelegten aktiven Gang höheren Ganges betätigt, was zur Erzeugung des auf die freie Getriebeeingangswelle W1 bzw. W2 wirksamen Synchronmomentes M_{Sync} führt. Aus der Fig. 2 wird deutlich, daß das Synchronmonemt M_{Sync} größer ist als das zuvor eingestellte Kupplungsmoment M_{K}. Demzufolge gerät die freie Kupplung K1 bzw. K2 in Schlupfbetrieb und die zugeordnete freie Getriebeeingangswelle W1 bzw. W2 wird abgebremst, und zwar bis zum Zeitpunkt t₂, zu dem eine Drehzahldifferenz Δn erreicht und die Betätigung der Synchronisiervorrichtung wieder gelöst wird. Daraufhin wird die freie Getriebeeingangswelle W1 bzw. W2 im wesentkichen unter der Wirkung des Kupplungsmomentes M_{K} wieder auf die Synchrondrehzahl n_{Sync} beschleunigt, die zum Zeitpunkt t₃ erreicht wird. In dieser Beschleunigungsphase wird in dem Verfahren der entsprechende Drehzahlgradient dn/dt bestimmt, mit dessen Hilfe dann das wirksame übertragene Drehmoment M_{K} mit großer Genauigkeit berechnet werden kann. Zum Zeitpunkt t₄ wird die freie Kupplung K1 bzw. K2 wieder getrennt und die zugeordnete freie Getriebeeingangswelle W1 bzw. W2 unter der Wirkung überwiegender Reibmomente wieder verzögert.

### BEZUGSZEICHENLISTE

- dn/dt: Drehzahlgradient
- F_{K}: Kupplungsstellkraft
- F_{Sync}: Synchronstellkraft
- G: Doppelkupplungsgetriebe
- G1: erster Vorwärtsgang
- G2: zweiter Vorwärtsgang
- G3: dritter Vorwärtsgang
- G4: vierter Vorwärtsgang
- G5: fünfter Vorwärtsgang
- G6: sechster Vorwärtsgang
- K1: erste Kupplung
- K2: zweite Kupplung
- M: Antriebsmotor
- M: Drehmoment
- M_{K}: (übertragenes) Kupplungsmoment
- M_{Sync}: Synchronmoment
- n: Drehzahl
- n_{fW}: Drehzahl der freien Getriebeeingangswelle
- n_{Mot}: Drehzahl des Antriebsmotors
- n_{Sync}: Synchrondrehzahl
- R: Rückwärtsgang
- S1: erste Synchronisiervorrichtung
- S2: zweite Synchronisiervorrichtung
- S3: dritte Synchronisiervorrichtung
- S4: vierte Synchronisiervorrichtung
- t: Zeit, Zeitpunkt
- t01: Schließbeginn der freien Kupplung
- t02: erstes Erreichen der Synchrondrehzahl der freien Getriebeeingangswelle
- t1: Betätigungsbeginn der Synchronisiervorrichtung
- t2: Betätigungsende der Synchronisiervorrichtung
- t3: zweites Erreichen der Synchrondrehzahl der freien Getriebeeingangswelle
- t4: Schließende der freien Kupplung
- W1: erste Getriebeeingangswelle
- W2: zweite Getriebeeingangswelle
- W3: Getriebeabtriebswelle
- Δn: Drehzahldifferenz

## Patentansprüche

1. Verfahren zur Kupplungskennlinienadaption eines automatisierten Doppelkupplungsgetriebes, insbesondere eines Kraftfahrzeuges, mit folgenden Verfahrensschritten:
(a) Erzeugung einer definierten Kupplungsstellkraft (F_{K}) zur Schließung einer einer freien Getriebeeingangswelle (W1; W2) zugeordneten Kupplung (K1; K2),
(b) Betätigung einer einem Gang (G1 - G6) der freien Getriebeeingangswelle (W1; W2) zugeordneten Synchronisiervorrichtung (S1 - S4),
(c) Lösen der Betätigung der betreffenden Synchronisiervorrichtung (S1 - S4),
(d) Ermittlung eines Drehzahlgradienten dn/dt der freien Getriebeeingangswelle (W1; W2),
(e) Ermittlung eines übertragenen Drehmomentes (M_{K}) der der freien Getriebeeingangswelle (W1; W2) zugeordneten Kupplung (K1; K2), mittels des Drehzahlgradienten DN/DT,
(f) Adaption der Kupplungskennlinie der der freien Getriebeeingangswelle (W1; W2) zugeordneten Kupplung (K1; K2).

2. Verfahren zur Kupplungskennlinienadaption eines automatisierten Doppelkupplungsgetriebes zur Anwendung bei einem geschalteten Gang (G1 - G6) einer freien Getriebeeingangswelle (W1; W2), mit den Verfahrensschritten (a), (d) bis (f) des Anspruches 1, und daß nach der Erzeugung der definierten Kupplungsstellkraft (F_{K}) die Schaltung des betreffenden Ganges (G1 - G6) gelöst wird.

3. Verfahren nach Anspruch 1 oder 2, **dadurch gekennzeichnet, daß** zur Verbesserung der Genauigkeit des Verfahrens vor und / oder nach den Verfahrensschritten des Anspruches 1 oder 2 ein resultierendes Reibmoment (M_{R}) oder ein resultierendes Schleppmoment (M_{S}) ermittelt wird:

4. Verfahren nach Anspruch 3, **dadurch gekennzeichnet, daß** das resultierende Reibmoment (M_{R}) oder das resultierende Schleppmoment (M_{S}) durch folgende Verfahrensschritte ermittelt wird:
(a) Betätigung einer einem Gang (G1 - G6) der freien Getriebeeingangswelle (W1; W2) zugeordneten Synchronisiervorrichtung (S1 - S4),
(b) Lösen der Betätigung der betreffenden Synchronisiervorrichtung (S1 - S4),
(c) Ermittlung eines Drehzahlgradienten dn/dt der freien Getriebeeingangswelle (W1; W2),
(d) Ermittlung des auf die freie Getriebeeingangswelle (W1; W2) wirksamen resultierenden Reibmomentes (M_{R}) bzw. des resultierenden Schleppmomentes (M_{S}).

5. Verfahren nach einem der Ansprüche 1 bis 4, **dadurch gekennzeichnet, daß** die Kupplungskennlinienadaption bei Vorliegen einer quasistationären Betriebsweise des Kraftfahrzeuges durchgeführt wird.

6. Verfahren nach einem der Ansprüche 1 bis 5, **dadurch gekennzeichnet, daß** die Kupplungskennlinienadaption in einem regelmäßigen oder unregelmäßigen Zeitabstand wiederholt wird.

7. Verfahren nach Anspruch 6, **dadurch gekennzeichnet, daß** die Kupplungsstellkraft (F_{K}) bei einer Wiederholung der Kupplungskennlinienadaption variiert wird.

8. Verfahren nach Anspruch 1 oder einem der Ansprüche 3 bis 7, **dadurch gekennzeichnet, daß** die Betätigung der Synchronisiervorrichtung (S1 - S4) nach Ablauf einer vorgegebenen Zeitspanne nach der Erzeugung der Kupplungsstellkraft (F_{K}) erfolgt.

9. Verfahren nach Anspruch 1 oder einem der Ansprüche 3 bis 7, **dadurch gekennzeichnet, daß** die Betätigung der Synchronisiervorrichtung (S1 - S4) nach Erreichen einer Synchrondrehzahl (n_{Sync}) der freien Getriebeeingangswelle (W1; W2) erfolgt.

10. Verfahren nach Anspruch 1 oder einem der Ansprüche 3 bis 9, **dadurch gekennzeichnet, daß** jeweils die einem bestimmten Gang (G1 - G6) der freien Getriebeeingangswelle (W1; W2) zugeordnete Synchronisiervorrichtung (S1 - S4) betätigt wird.

11. Verfahren nach Anspruch 1 oder einem der Ansprüche 3 bis 9, **dadurch gekennzeichnet, daß**, bezogen auf den aktuell eingelegten Gang, jeweils die dem nächsthöheren oder nächstniedrigeren Gang der freien Getriebeeingangswelle (W1; W2) zugeordnete Synchronisiervorrichtung (S1 - S4) betätigt wird.

12. Verfahren nach Anspruch 1 oder einem der Ansprüche 3 bis 11, **dadurch gekennzeichnet, daß** die Synchronisiervorrichtung (S1 - S4) nach Ablauf einer vorgegebenen Zeitspanne nach der Betätigung (t₁) der Synchronisiervorrichtung (S1 - S4) gelöst wird.

13. Verfahren nach einem der Ansprüche 9 bis 11, **dadurch gekennzeichnet, daß** die Synchronisiervorrichtung (S1 - S4) nach Erreichen einer vorgegebenen Drehzahldifferenz der freien Getriebeeingangswelle (W1; W2) zu der Synchrondrehzahl (n_{Sync}) gelöst wird.

14. Verfahren nach Anspruch 12 oder 13, **dadurch gekennzeichnet, daß** nach dem Lösen (t₂) der Synchronisiervorrichtung (S1 - S4) in mehreren festgelegten zeitlichen Abständen jeweils eine Drehzahl (n_{fW}) der freien Getriebeeingangswelle (W1; W2) ermittelt wird, und daß aus den Drehzahlen (n_{fW}) und zugeordneten Zeitwerten (t) der Drehzahlgradient dn/dt bestimmt wird.

15. Verfahren nach Anspruch 12 oder 13, **dadurch gekennzeichnet, daß** eine Beschleunigungszeit oder Verzögerungszeit zwischen dem Lösen (t₂) der Synchronisiereinrichtung (S1 - S4) und dem Erreichen (t₃) der Synchrondrehzahl (n_{Sync}) der freien Getriebeeingangswelle (W1; W2) ermittelt wird, und daß aus der Drehzahldifferenz und der Beschleunigungs- oder Verzögerungszeit (t₃ - t₂) der Drehzahlgradient dn/dt bestimmt wird.

16. Automatisiertes Doppelkupplungsgetriebe, insbesondere fur ein Kraftfahrzeug, mit einer Vorrichtung zur Kupplungskennlinienadaption, mit folgenden Merkmalen:
(a) eine Steuereinheit zur Steuerung eines Verfahrensablaufes, arbeitend nach einem der Ansprüche 1 bis 15,
(b) ein Kupplungssteuergerät zur Erzeugung definierter Kupplungsstellkräfte (F_{K}) zur Schließung einer ersten und einer zweiten Kupplung (K1, K2),
(c) ein Synchronisiersteuergerät zur Betätigung und zum Lösen der Betätigung einer jeweils einem Gang (G1 - G6) einer ersten und einer zweiten Getriebeeingangswelle (W1, W2) zugeordneten Synchronisiervorrichtung (S1 - S4),
(d) eine Drehzahlmeßvorrichtung zur Ermittlung einer Drehzahl (n_{fW}) der ersten und der zweiten Getriebeeingangswelle (W1, W2),
(e) eine Zeitmessvorrichtung zur Ermittlung von Zeitspannen,
(f) eine Recheneinheit zur Berechnung von Drehzahlgradienten und Kennliniendaten, und
(g) eine Speichereinheit zur Abspeicherung der Kennliniendaten.

## Claims

1. Method for clutch characteristic curve adaptation of an automatic dual-clutch transmission, in particular of a motor vehicle, having the following method steps:
(a) generating a defined clutch setting force (F_{K}) for closing a clutch (K1; K2) which is assigned to a free transmission input shaft (W1; W2),
(b) actuating a synchronizing device (S1 - S4) which is assigned to a gear (G1 - G6) of the free transmission input shaft (W1; W2),
(c) ending the actuation of the relevant synchronizing device (S1 - S4),
(d) determining a rotational speed gradient dn/dt of the free transmission input shaft (W1; W2),
(e) determining a torque to be transmitted (M_{K}) by the clutch (K1; K2) assigned to the free transmission input shaft (W1; W2) by means of the rotational speed gradient dn/dt,
(f) adapting the clutch characteristic curve of the clutch (K1; K2) assigned to the free transmission input shaft (W1; W2).

2. Method for clutch characteristic curve adaptation of an automatic dual-clutch transmission for use in a selected gear (G1 - G6) of a free transmission input shaft (W1; W2) having the method steps (a), (d) to (f) of claim 1, and the selection of the relevant gear (G1-G6) being ended after the defined clutch setting force (F_{K}) is generated.

3. Method according Claim 1 or 2, **characterized in that** to improve the accuracy of the method, a resulting friction torque (M_{R}) or a resulting drag torque (M_{S}) is determined before and/or after the method steps of Claims 1 and 2.

4. Method according to Claim 3, **characterized in that** the resulting friction torque (M_{R}) or the resulting drag torque (M_{S}) is determined by means of the following method steps:
(a) actuating a synchronizing device (S1 - S4) which is assigned to a gear (G1 - G6) of the free transmission input shaft (W1; W2),
(b) ending the actuation of the relevant synchronizing device (S1 - S4),
(c) determining a rotational speed gradient dn/dt of the free transmission input shaft (W1; W2),
(d) determining the resulting friction torque (M_{R}) and/or the resulting drag torque (M_{S}) acting on the free transmission input shaft (W1; W2).

5. Method according to one of Claims 1 to 4, **characterized in that** the clutch characteristic curve adaptation is carried out when a quasi-steady-state operating mode of the motor vehicle is present.

6. Method according to one of Claims 1 to 5, **characterized in that** the clutch characteristic curve adaptation is carried out repeatedly at regular or irregular time intervals.

7. Method according to Claim 6, **characterized in that** the clutch setting force (F_{K}) is varied when the clutch characteristic curve adaptation is repeated.

8. Method according to Claim 1 or one of Claims 3 to 7, **characterized in that** the synchronizing device (S1 - S4) is actuated once a predefined time period has elapsed after the generation of the clutch setting force (F_{K}).

9. Method according to Claim 1 or one of Claims 3 to 7, **characterized in that** the synchronizing device (S1 - S4) is actuated once a synchronous speed (n_{sync}) of the free transmission input shaft (W1; W2) is reached.

10. Method according to Claim 1 or one of Claims 3 to 9, **characterized in that**, in each case, the synchronizing device (S1 - S4) assigned to a certain gear (G1 - G6) of the free transmission input shaft (W1; W2) is actuated.

11. Method according to Claim 1 or one of Claims 3 to 9, **characterized in that**, in each case, the synchronizing device (S1 - S4) assigned to the next highest or next lowest gear of the free transmission input shaft (W1; W2) relative to the currently engaged gear is actuated.

12. Method according to Claim 1 or one of Claims 3 to 11, **characterized in that** the synchronizing device (S1 - S4) is disengaged once a predefined time period has elapsed after the actuation (t₁) of the synchronizing device (S1 - S4).

13. Method according to one of Claims 9 to 11, **characterized in that** the synchronizing device (S1 - S4) is disengaged once a predefined rotational speed difference between the free transmission input shaft (W1; W2) and the synchronous speed (n_{sync}) is reached.

14. Method according to Claim 12 or 13, **characterized in that**, after the disengagement (t₂) of the synchronizing device (S1 - S4), a rotational speed (n_{fW}) of the free transmission input shaft (W1; W2) is determined in each case at a plurality of fixed time intervals, and **in that** the rotational speed gradient dn/dt is determined from the rotational speeds (n_{fW}) and assigned time values (t).

15. Method according to Claim 12 or 13, **characterized in that** an acceleration time or deceleration time between the disengagement (t₂) of the synchronizing device (S1 - S4) and the attainment (t₃) of the synchronous speed (n_{sync}) of the free transmission input shaft (W1; W2) is determined, and **in that** the rotational speed gradient dn/dt is determined from the rotational speed difference and the acceleration or deceleration time (t₃ - t₂).

16. Automatic dual-clutch transmission, in particular for a motor vehicle, having a device for clutch characteristic curve adaptation, with the following features:
(a) a control unit for controlling a method process, operating according to one of Claims 1 to 15,
(b) a clutch control unit for generating defined clutch setting forces (F_{K}) for closing a first and a second clutch (K1, K2),
(c) a synchronizing control unit for actuating and for ending the actuation of a synchronizing device (S1 - S4) assigned in each case to a gear (G1 - G6) of a first and a second transmission input shaft (W1; W2),
(d) a rotational speed measuring device for determining a rotational speed (n_{fW}) of the first and the second transmission input shafts (W1; W2),
(e) a time measuring device for determining time periods,
(f) a processor for calculating rotational speed gradients and characteristic curve data, and
(g) a memory unit for storing characteristic curve data.

## Revendications

1. Procédé pour l'adaptation de la courbe caractéristique d'accouplement d'une boîte de vitesses automatisée à double embrayage, notamment d'un véhicule automobile, comprenant les étapes suivantes :
(a) Génération d'une force de commande d'embrayage définie (F_{K}) pour fermer un embrayage (K1 ; K2) associé à un arbre d'entrée de boîte de vitesses libre (W1 ; W2),
(b) Actionnement d'un dispositif de synchronisation (S1 - S4) associé à un rapport (G1 - G6) de l'arbre d'entrée de boîte de vitesses libre (W1 ; W2),
(c) Déclenchement de l'actionnement du dispositif de synchronisation (S1 - S4) concerné,
(d) Détermination d'un gradient de vitesse de rotation dn/dt de l'arbre d'entrée de boîte de vitesses libre (W1 ; W2),
(e) Détermination d'un couple transmis (M_{K}) de l'embrayage (K1 ; K2) associé à l'arbre d'entrée de boîte de vitesses libre (W1 ; W2) au moyen du gradient de vitesse de rotation dn/dt,
(f) Adaptation de la courbe caractéristique d'accouplement de l'embrayage (K1 ; K2) associé à l'arbre d'entrée de boîte de vitesses libre (W1 ; W2).

2. Procédé pour l'adaptation de la courbe caractéristique d'accouplement d'une boîte de vitesses automatisée à double embrayage en vue d'une utilisation avec un rapport (G1 - G6) engagé d'un arbre d'entrée de boîte de vitesses libre (W1 ; W2) comprenant les étapes (a), (d) à (f) de la revendication 1 et que l'engagement du rapport concerné (G1 - G6) est déclenché après avoir généré la force de commande d'embrayage définie (F_{K}) .

3. Procédé selon la revendication 1 ou 2, **caractérisé en ce qu'**un couple de friction résultant (M_{R}) ou un moment d'entraînement résultant (M_{S}) est déterminé avant et/ou après les étapes de la revendication 1 ou 2 pour améliorer la précision du procédé.

4. Procédé selon la revendication 3, **caractérisé en ce que** le couple de friction résultant (M_{R}) ou le moment d'entraînement résultant (M_{S}) est déterminé par les étapes suivantes :
(a) Actionnement d'un dispositif de synchronisation (S1 - S4) associé à un rapport (G1 - G6) de l'arbre d'entrée de boîte de vitesses libre (W1 ; W2),
(b) Déclenchement de l'actionnement du dispositif de synchronisation (S1 - S4) concerné,
(c) Détermination d'un gradient de vitesse de rotation dn/dt de l'arbre d'entrée de boîte de vitesses libre (W1 ; W2),
(d) Détermination du couple de friction résultant (M_{R}) ou du moment d'entraînement résultant (M_{S}) agissant sur l'arbre d'entrée de boîte de vitesses libre (W1 ; W2).

5. Procédé selon l'une des revendications 1 à 4, **caractérisé en ce que** l'adaptation de la courbe caractéristique d'accouplement est effectuée en présence d'un mode de fonctionnement quasi-stationnaire du véhicule automobile.

6. Procédé selon l'une des revendications 1 à 5, **caractérisé en ce que** l'adaptation de la courbe caractéristique d'accouplement est répétée à un intervalle de temps régulier ou irrégulier.

7. Procédé selon la revendication 6, **caractérisé en ce que** la force de commande d'embrayage (F_{K}) varie lors d'une répétition de l'adaptation de la courbe caractéristique d'accouplement.

8. Procédé selon la revendication 1 ou l'une des revendications 3 à 7, **caractérisé en ce que** l'actionnement du dispositif de synchronisation (S1 - S4) s'effectue après écoulement d'un intervalle de temps prédéfini après la génération de la force de commande d'embrayage (F_{K}) .

9. Procédé selon la revendication 1 ou l'une des revendications 3 à 7, **caractérisé en ce que** l'actionnement du dispositif de synchronisation (S1 - S4) s'effectue après avoir atteint une vitesse de rotation synchrone (n_{sync}) de l'arbre d'entrée de boîte de vitesses libre (W1 ; W2).

10. Procédé selon la revendication 1 ou l'une des revendications 3 à 9, **caractérisé en ce que** c'est à chaque fois le dispositif de synchronisation (S1 - S4) associé à un rapport donné (G1 - G6) de l'arbre d'entrée de boîte de vitesses libre (W1 ; W2) qui est actionné.

11. Procédé selon la revendication 1 ou l'une des revendications 3 à 9, **caractérisé en ce qu'**en rapport avec le rapport actuellement engagé, c'est à chaque fois le dispositif de synchronisation (S1 - S4) associé au rapport immédiatement supérieur ou immédiatement inférieur de l'arbre d'entrée de boîte de vitesses libre (W1 ; W2) qui est actionné.

12. Procédé selon la revendication 1 ou l'une des revendications 3 à 11, **caractérisé en ce que** le dispositif de synchronisation (S1 - S4) est déclenché après l'écoulement d'un intervalle de temps donné après l'actionnement (t₁) du dispositif de synchronisation (S1 - S4).

13. Procédé selon l'une des revendications 9 à 11, **caractérisé en ce que** le dispositif de synchronisation (S1 - S4) est déclenché une fois qu'une différence de vitesse de rotation prédéfinie entre l'arbre d'entrée de boîte de vitesses libre (W1 ; W2) et la vitesse de rotation synchrone (n_{sync}) a été atteint.

14. Procédé selon la revendication 12 ou 13, **caractérisé en ce qu'**après le déclenchement (t₂) du dispositif de synchronisation (S1 - S4), une vitesse de rotation (n_{W}) de l'arbre d'entrée de boîte de vitesses libre (W1 ; W2) est à chaque fois déterminée à plusieurs intervalles de temps donnés et **en ce que** le gradient de vitesse de rotation dn/dt est déterminé à partir des vitesses de rotation (n_{W}) et des valeurs de temps (t) associées.

15. Procédé selon la revendication 12 ou 13, **caractérisé en ce qu'**un temps d'accélération ou un temps de ralentissement entre le déclenchement (t₂) du dispositif de synchronisation (S1 - S4) et l'atteinte (t₃) de la vitesse de rotation synchrone (n_{sync}) de l'arbre d'entrée de boîte de vitesses libre (W1 ; W2) est déterminé et **en ce que** le gradient de vitesse de rotation dn/dt est déterminé à partir de la différence de vitesse de rotation et du temps d'accélération ou du temps de ralentissement (t₃ - t₂).

16. Boîte de vitesses automatisée à double embrayage, notamment pour un véhicule automobile, présentant un dispositif pour l'adaptation de la courbe caractéristique d'accouplement, avec les caractéristiques suivantes :
(a) Une unité de commande pour commander une exécution du procédé fonctionnant selon l'une des revendications 1 à 15,
(b) Un appareil de commande d'embrayage pour générer une force de commande d'embrayage définie (F_{K}) pour fermer un premier et un deuxième embrayage (K1 ; K2),
(c) Un appareil de commande de synchronisation pour actionner ou déclencher l'actionnement d'un dispositif de synchronisation (S1 - S4) à chaque fois associé à un rapport (G1 - G6) d'un premier et d'un deuxième arbre d'entrée de boîte de vitesses (W1 ; W2),
(d) Un dispositif de mesure de la vitesse de rotation pour déterminer une vitesse de rotation (n_{W}) du premier et du deuxième arbre d'entrée de boîte de vitesses (W1 ; W2),
(e) Un dispositif de mesure du temps pour déterminer des intervalles de temps,
(f) Une unité de calcul pour calculer les gradients de vitesse de rotation et les données de la courbe caractéristique,
(g) Une unité de mémorisation pour enregistrer les données de la courbe caractéristique.
